# EUROPEAN PATENT SPECIFICATION

(11) **EP 1 647 472 B1**
(45) Date of publication and mention of the grant of the patent: **12.12.2007**
(21) Application number: 05018532.1
(22) Date of filing: 25.08.2005
(51) Int. Cl.: B62D 55/24, B62D 55/125

(54) **Undercarriage equipped with rubber crawler**
Gummiraupenbandlaufwerk
Ensemble de roulement à chenille en caoutchouc

(30) Priority: 14.10.2004 KR 2004082181
(43) Date of publication of application: 19.04.2006
(73) Proprietor: Dong-Il Rubber Belt Co., Ltd., Geumjeong-gu Busan 609-721 (KR)
(72) Inventor: Park, Dong-hwa, Seo-gu, Busan, 602-802 (KR); Cho, Joon-il, Geumjeong-gu, Busan, 609-350 (KR)
(74) Representative: Grünecker, Kinkeldey, Stockmair & Schwanhäusser Anwaltssozietät

(56) References cited:
- FR-A- 510 341
- GB-A- 814 268
- US-A- 3 459 459
- US-A1- 2003 189 377

## Description

### TECHNICAL FIELD

The present invention relates to an undercarriage equipped with a non-steel type rubber crawler using chain action, particularly to an undercarriage of a track system for a skid loader in which an auxiliary sprocket axis and an auxiliary sprocket are equipped to solve load concentration at the contact of a non-steel type rubber crawler, which is adopted to reduce total load of a vehicle, and cogs of a sprocket and a gearchain is equipped surrounding a main sprocket axis and the auxiliary sprocket axis, so that it receives the load dispersed over the large contact area of the non-steel type rubber crawler, thereby relieving internal stress concentration at the sprocket and the non-steel type rubber crawler and significantly improving life cycle of the non-steel type rubber crawler.

### BACKGROUND ART

In general, heavy vehicles such as skid loader, excavator, bulldozer, etc. have an undercarriage part supporting the top part and transferring it to a wanted position.

Typically, a crawler is used in the undercarriage for efficient transportation of a heavy vehicle on rough or unstable ground. Recently, a rubber crawler is widely used to reduce vibration and noise during transpiration and minimize road damage.

Usually, the rubber crawler has a steel core inside the rubber track, which receives power from sprocket and the idler. But, with regard to improvement in bending ability of the rubber crawler and reduction of vehicle weight, a non-steel type rubber crawler without a steel core is proposed.

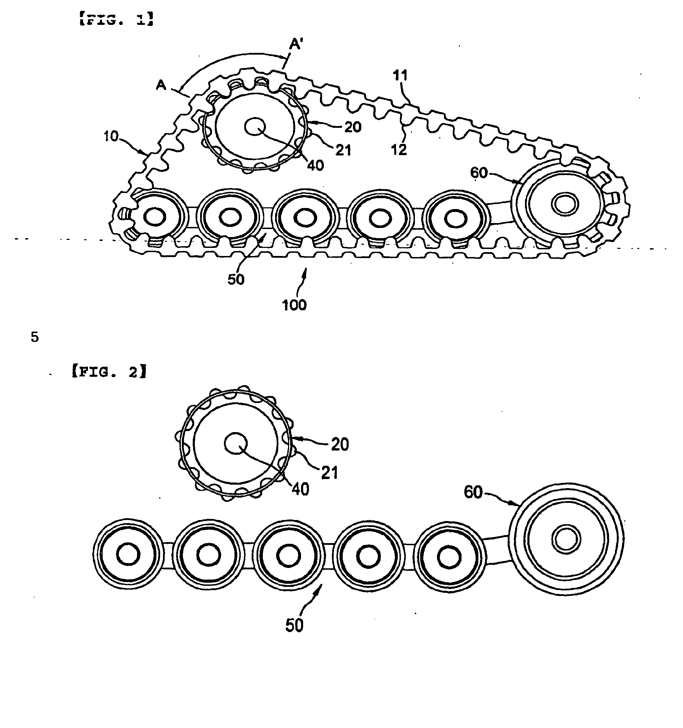

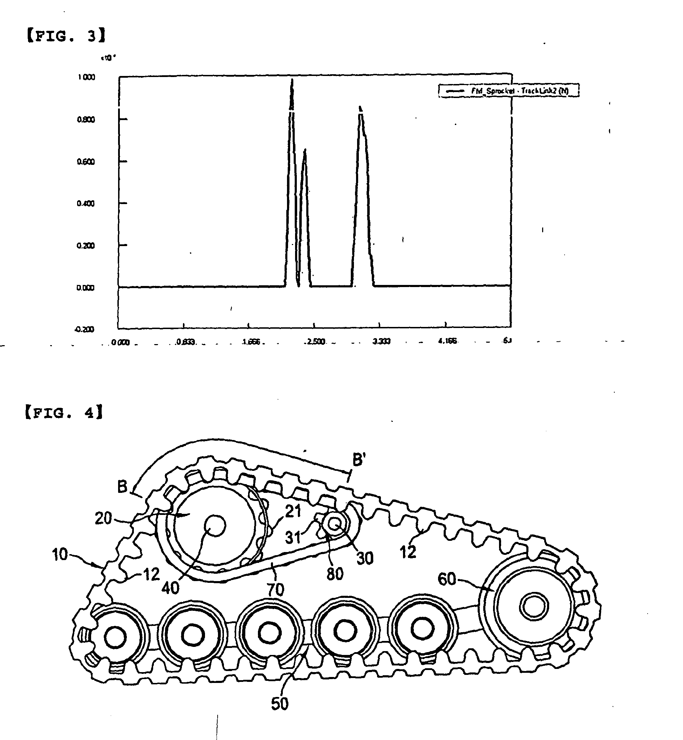

FIG. 1 and FIG. 2 are front views of an undercarriage having such a non-steel type rubber crawler with and without a crawler, respectively.

As seen in FIG. 1 and FIG. 2, the undercarriage is equipped with non-steel type rubber crawler 10, sprocket 20 for driving the non-steel type rubber crawler 10, track roller 50 attached inside of the non-steel type rubber crawler 10 and idler 60.

The non-steel type rubber crawler 10 comprises a belt body having a closed-loop shape, pull lugs 11 formed on the outer surface of the belt body and protruding teeth 12 formed on the inner surface of the belt body. The sprocket 20, which receives rotational driving force from main axis 40, has protruding cogs 21 at the outer circumference. As they are geared with protruding teeth 12 at the inside of the non-steel type rubber crawler 10, the rotational driving force is transferred, so that the non-steel type rubber crawler 10 moves forward or backward. Then, the non-steel type rubber crawler 10 rotates along with track roller 50 at the bottom and idler 60 in the rear, moving forward or backward distributing the weight load of the vehicle uniformly to the ground surface.

In such an undercarriage, the most loaded parts are the cogs 21 where the sprocket 20 is geared with the non-steel type rubber crawler 10 and the point where the non-steel type rubber crawler 10 contacts the ground.

There are some researches on dynamic analysis at the point where the non-steel type rubber crawler 10 contacts the ground and distribution of internal stress thereabout. To take an example, Korean Patent Application No. 2002-0087890 (Rubber crawler and rubber crawler driving apparatus) reduces rigidity difference of less rigid first lug part and more rigid second lug part by lessening thickness of the second lug along the belt body direction smaller than that of the first lug part. As a result, deformation of the crawler is reduced, thereby reducing vibration and improving riding comfort.

On the other hand, there is no research on dynamic analysis at the cogs 21 where the sprocket 20 is geared with the non-steel type rubber crawler 10 (A-A' in FIG. 1) and distribution of internal stress thereabout.

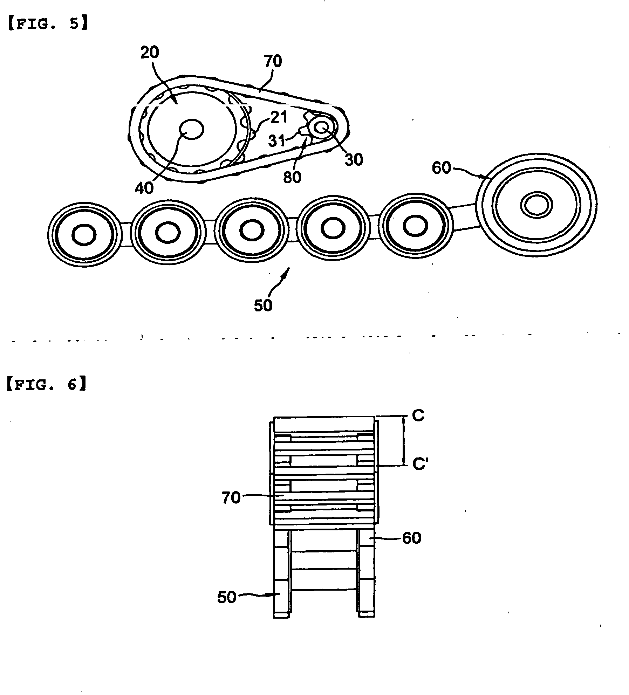

Although there is advantage of improvement of bending ability of the rubber crawler and reduction of vehicle weight when the non-steel type rubber crawler 10 is used for an undercarriage, the non-steel type rubber crawler is difficult to equip and stress tends to be concentrated at specific points (see FIG. 3) because of relative small area at which the rubber crawler contact the sprocket, which causes stress-induced deformation, leading to reduction of life cycle and durability.

Accordingly, it is required to relieve stress at the contact of the non-steel type rubber crawler and the sprocket in heavy vehicles like skid loader as friction between the vehicle and the ground is transferred to the rubber crawler, thereby reducing stress-induced deformation and improving life cycle and durability.

An example of an under carriage with a non-steel type rubber crawler, a sprocket, an idler and a tensioning device between the sprocket and the idler is given in US 2003/189377 A1.

### DISCLOSURE OF INVENTION

It is an object of the present invention to relieve stress at the contact of a non-steel type rubber crawler, which is adopted in an undercarriage of a heavy vehicle like skid loader to reduce load by the vehicle weight, and a sprocket, thereby reducing stress-induced deformation the rubber crawler and improving life cycle and durability.

It is another object of the invention to offer more efficient and stable transfer of driving force between the non-steel type rubber crawler and the sprocket, thereby improving riding comfort.

Other objects of the invention will be described in more detail herein below.

The undercarriage equipped with a non-steel type rubber crawler using chain action according to the present invention is characterized by comprising a rubber crawler inside of which is contacted by a rotating sprocket, an idler rotated by the rubber crawler, a track roller, a rotatable auxiliary sprocket contacting inside of the rubber crawler as spaced from a main sprocket axis and a gearchain outside of which contacts inside of the rubber crawler and inside of which contacts outside of the sprocket and the auxiliary sprocket, thereby preventing load concentration at the sprocket.

Preferably, gear ratio of the sprocket and the auxiliary sprocket is set to 2:1 for efficient stress dispersion.

And, preferably, the undercarriage may further comprise at least one supporting axis between the main axis and the auxiliary axis and a supporting sprocket having cogs that gear with the gearchain at both ends of the supporting axis in order to prevent the gearchain from being suspended downward because of the long distance from the main axis and the auxiliary axis and the weight of the gearchain and to prevent non-uniform contact of the gearchain with the non-steel type rubber crawler.

Preferably, the supporting axis and the supporting sprocket are located in between the main axis and the auxiliary axis. More supporting axis and supporting sprocket may be added when the distance between the main axis and the auxiliary axis is increased to increase contact area of the gearchain and the non-steel type rubber crawler.

### BRIEF DESCRIPTION OF THE DRAWINGS

FIG. 1 is a side view of a conventional contact of a sprocket and a non-steel type rubber crawler.
FIG. 2 is a side view of a conventional undercarriage in which the non-steel type rubber crawler is omitted.
FIG. 3 is a graph showing dynamic analysis of the undercarriage of FIG. 1.
FIG. 4 is a side view of an undercarriage according to a preferred embodiment of the present invention.
FIG. 5 is a side view of an undercarriage according to a preferred embodiment of the present invention in which the non-steel type rubber crawler is omitted.
FIG. 6 is a front view of an undercarriage according to a preferred embodiment of the present invention.
FIG. 7 is a plan view of an undercarriage according to a preferred embodiment of the present invention.
FIG. 8 is a graph showing dynamic analysis of the undercarriage according to a preferred embodiment of the present invention.
FIG. 9 is a side view of an undercarriage according to another embodiment of the present invention.

### *Symbols used in the drawings*

| | |
|---|---|
| 10: non-steel type rubber crawler | |
| 11: lug | 12: protruding tooth |
| 20: sprocket | 21: cog |
| 30: auxiliary axis | 40: main axis |
| 50: track roller | 60: idler |
| 70: gearchain | 80: auxiliary sprocket |
| 90: supporting axis | 91: supporting sprocket |
| 100: undercarriage | |

### BEST MODE FOR CARRYING OUT THE INVENTION

Hereunder is given a detailed description of a preferred embodiment of the present invention referring to the attached drawings. In the description, known matters that are considered unnecessary in describing the invention will not be described in detail.

The terms were selected considering the roles in the present invention. The terms need to be defined based on the overall contents of this specification, since they may be used differently depending on users and practices.

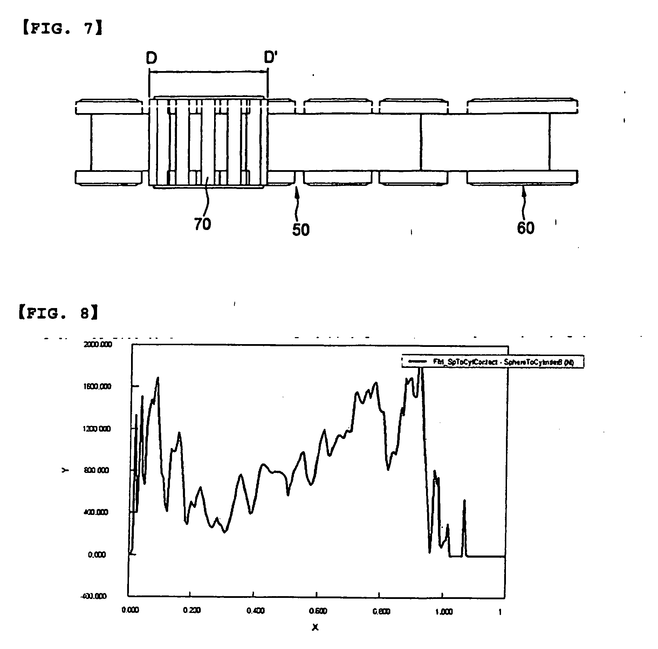

FIG. 4 is a side view of undercarriage 100 according to a preferred embodiment of the invention. It shows auxiliary sprocket 80 and gearchain 70 which are characteristic of the undercarriage 100 of the invention.

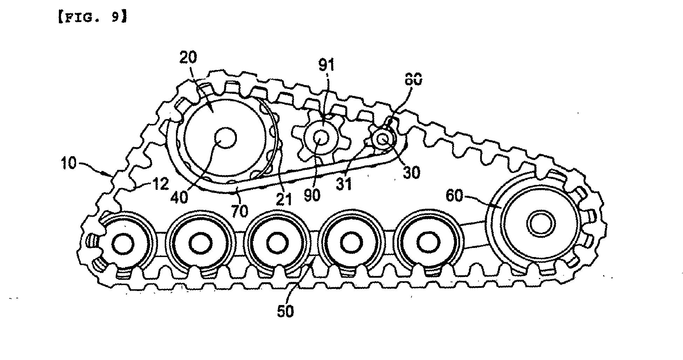

Description of non-steel type rubber crawler 10 having protruding teeth 12 on the inside, track roller 50 and idler 60 will be omitted because they are the same as those of a conventional undercarriage. Auxiliary axis 30, auxiliary sprocket 80 and gearchain 70, which are key constituents of the invention, are shown in FIG. 4 and FIG. 5.

Sprocket 20 is receives rotational driving force from main axis 40. It has cogs 21 spaced at a given interval on the outer circumference. The auxiliary axis 30 is spaced from the main axis 40 at a given interval. Each end of the auxiliary axis is axis-joined with the auxiliary sprocket 80 auxiliary cogs spaced at a given interval on the outer circumference.

In the embodiment, gear ratio, or the ratio of number of the cogs 21 of the sprocket 20 to that of the cogs 31 of the auxiliary sprocket 80, is 12:6, or 2:1, as seen in FIG. 4 and FIG. 5. That is, it is preferable that the gear ratio is 2:1. Otherwise, stress dispersion may be inefficient. The gearchain 70 forms a closed loop surrounding the sprocket 20, the auxiliary sprocket 80 and their cogs 21, 31.

The gearchain 70 receives rotational driving force from the cogs 21 of the sprocket 20, which receive rotational driving force from the main axis 40. As the gearchain 70 rotates, so does the auxiliary sprocket 80 at the auxiliary axis 30.

The portion of the gearchain 70 where the cogs 21, 31 of the sprocket 20 and the auxiliary sprocket 30 are rotated by the gearchain, i.e., section B-B' in FIG. 4, is contacted by protruding teeth 12 of the non-steel type rubber crawler 10. At the section B-B', rotational driving force is transferred from the gearchain 70 to the non-steel type rubber crawler 10.

While rotational driving force is transferred at a limited portion of the cogs 21 of the sprocket 20 (section A-A' of FIG. 1) in the conventional system, it is indirectly transferred at a larger area (section B-B' of FIG. 4) in the preferred embodiment of the invention, thereby uniformly distributing the load from above and relieving internal stress concentration.

FIG. 6 and FIG. 7 are front and plan views of the undercarriage 100 according to the preferred embodiment of the invention. It can be seen that the undercarriage 100 has a larger contact area than the conventional one.

Section B-B' of FIG. 4 corresponds to section C-C' of FIG. 6 and section D-D' of FIG. 7. The farther the auxiliary axis 30 is from the main axis 40 as parallel to the top portion of the non-steel type rubber crawler 10, the larger is the area where the gearchain 70 contacts the non-steel type rubber crawler 10, thereby capable of relieving stress concentration.

FIG. 8 is a graph showing dynamic analysis of the undercarriage according to the preferred embodiment of the present invention. It shows the joint force that the portion at which the gearchain 70 contacts the non-steel type rubber crawler 10 (section B-B') receives during transportation with time analyzed by RecurDyn software. The graph shows that the stress, which was concentration in FIG. 3, is distributed almost uniformly. Resultantly, load of the vehicle is distributed uniformly and thus durability improves significantly.

FIG. 9 is a side view of an undercarriage according to another embodiment of the present invention. Supporting axis 90 is added between the main axis 40 and the auxiliary axis 30 of the embodiment of FIG. 4, preferably at the midpoint of the main axis 40 and the auxiliary axis 30. At each end of the supporting axis 90 is equipped supporting sprocket 91. The supporting axis 90 and the supporting sprocket 91 prevent the gearchain 70 from being suspended downward because of the long distance between the main axis 40 and the auxiliary axis 30 and the weight of the gearchain 70, thereby preventing non-uniform contact of the gearchain 70 with the non-steel type rubber crawler 10.

The more the number of the supporting axis 90 and the supporting sprocket 91 between the main axis 40 and the auxiliary axis 30, the farther can be the auxiliary axis 30 from the main axis 40, providing larger contact area of the gearchain 70 with the non-steel type rubber crawler 10 and improving stress dispersion and durability.

While the present invention has been described in detail with reference to the preferred embodiments, those skilled in the art will appreciate that various modifications and substitutions can be made thereto without departing from the scope of the invention.

### INDUSTRIAL APPLICABILITY

The present invention offers the advantage of relieving stress concentration at between the non-steel type rubber crawler and the sprocket when driving a heavy vehicle like a skid loader and the consequent stress accumulation by increased contact area with the gearchain, thereby reducing deformation and stress of the protruding teeth, improving durability and extending life cycle.

Also, stable and efficient power transfer by the gearchain between the non-steel type rubber crawler and the sprocket offers improved riding comfort.

## Claims

1. An undercarriage equipped with a non-steel type rubber crawler using chain action comprising a rubber crawler (10), the inside of which is contacted by a rotating sprocket (20), an idler rotated by the rubber crawler and a track roller (50),
**characterized by**
a rotatable auxiliary sprocket (80) contacting the inside of the rubber crawler as spaced from the main sprocket axis and a gearchain (70), the outside of which contacts the inside of the rubber crawler and the inside of which contacts the outside of the sprocket and the auxiliary sprocket, thereby preventing load concentration at the sprocket.

2. The undercarriage of claim 1 further comprising at least one supporting axis (90) between the main axis and the auxiliary axis and at least one supporting sprocket having cogs that gear with the gearchain at each end of the supporting axis.

3. The undercarriage of claim 2, the supporting axis (90) and the supporting sprocket (91) being positioned at the midpoint of the main axis and the auxiliary axis.

4. The undercarriage of claim 1, gear ratio of the sprocket to the auxiliary sprocket being 2:1.

## Patentansprüche

1. Fahrgestell, das mit einer Raupenkette vom Nichtstahl-Typ versehen ist, die Kettenwirkung nutzt und eine Gummi-Raupenkette (10), deren Innenseite mit einem sich drehenden Kettenrad (20) in Kontakt ist, ein Zwischenrad, das durch die Gummi-Raupenkette gedreht wird, und eine Laufrolle (50) umfasst,
**gekennzeichnet durch**
ein drehbares Zusatz-Kettenrad (80), das mit der Innenseite der Gummi-Raupenkette von der Haupt-Kettenradachse beabstandet sowie einer Zahnkette (70) in Kontakt ist, deren Außenseite mit der Innenseite der Gummi-Raupenkette in Kontakt ist und deren Innenseite mit der Außenseite des Kettenrades und des Zusatz-Kettenrades in Kontakt ist, um so Lastkonzentration an dem Kettenrad zu verhindern.

2. Fahrgestell nach Anspruch 1, das des Weiteren wenigstens eine tragende Achse (90) zwischen der Hauptachse und der Zusatzachse und wenigstens ein tragendes Kettenrad umfasst, das Zähne hat, die mit der Zahnkette an jedem Ende der tragende Achse in Eingriff kommen.

3. Fahrgestell nach Anspruch 2, wobei die tragende Achse und das tragende Kettenrad (91) am Mittelpunkt der Hauptachse und der Zusatzachse positioniert sind.

4. Fahrgestell nach Anspruch 1, wobei das Zähnezahl-Verhältnis des Kettenrades zu dem Zusatz-Kettenrad 2:1 beträgt.

## Revendications

1. Train de roulement équipé d'une chenille en caoutchouc du type autre qu'en acier utilisant une action de chaîne, comprenant une chenille en caoutchouc (10) dont la partie interne est en contact avec un pignon rotatif (20), un pignon fou mis en rotation par la chenille en caoutchouc et un galet de chenille (50),
**caractérisé en ce qu'**il comprend
un pignon auxiliaire rotatif (80) en contact avec la partie interne de la chenille en caoutchouc à l'écart de l'axe de pignon principal et un train d'engrenages (70) dont la partie externe est en contact avec la partie interne de la chenille en caoutchouc et dont la partie interne est en contact avec la partie externe du pignon et du pignon auxiliaire, empêchant ainsi une concentration de charge au niveau du pignon.

2. Train de roulement selon la revendication 1, comprenant en outre au moins un axe de support (90) entre l'axe principal et l'axe auxiliaire et au moins un pignon de support ayant des dents qui s'engrènent avec le train d'engrenages à chaque extrémité de l'axe de support.

3. Train de roulement selon la revendication 2, dont l'axe de support (90) et le pignon de support (91) sont positionnés au point médian entre l'axe principal et l'axe auxiliaire.

4. Train de roulement selon la revendication 1, dont le rapport de démultiplication du pignon au pignon auxiliaire est égal à 2:1.
